(19) Europäisches Patentamt
European Patent Office
Office européen des brevets

(11) Veröffentlichungsnummer : **0 306 867 B1**

(12) # EUROPÄISCHE PATENTSCHRIFT

(45) Veröffentlichungstag der Patentschrift :
**07.08.91 Patentblatt 91/32**

(51) Int. Cl.$^5$ : **C08F 4/64,** C08F 10/06

(21) Anmeldenummer : **88114424.0**

(22) Anmeldetag : **03.09.88**

(54) **Verfahren zum Herstellen von Homo- und Copolymerisaten des Propens mittels eines Ziegler-Natta-Katalysatorsystems.**

(30) Priorität : **08.09.87 DE 3730022**

(43) Veröffentlichungstag der Anmeldung :
**15.03.89 Patentblatt 89/11**

(45) Bekanntmachung des Hinweises auf die Patenterteilung :
**07.08.91 Patentblatt 91/32**

(84) Benannte Vertragsstaaten :
**AT BE DE ES FR GB IT NL**

(56) Entgegenhaltungen :
**EP-A- 0 014 523**
**EP-A- 0 045 977**
**EP-A- 0 173 485**

(73) Patentinhaber : **BASF Aktiengesellschaft**
**Carl-Bosch-Strasse 38**
**W-6700 Ludwigshafen (DE)**

(72) Erfinder : **Zolk, Ralf, Dr.**
**Gerhard-Hauptmann-Strasse 33**
**W-6717 Hessheim (DE)**
Erfinder : **Kerth, Juergen, Dr.**
**Wattenheimer Strasse 15**
**W-6719 Carlsberg (DE)**
Erfinder : **Hemmerich, Rainer, Dr.**
**Veilchenweg 9**
**W-6718 Gruenstadt (DE)**

**EP 0 306 867 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft ein Verfahren zum Herstellen von Homopolymerisaten des Propens sowie Copolymerisaten des Propens mit untergeordneten Mengen anderer $C_2$— bis $C_{12}$—, insbesondere $C_2$— bis $C_6$-α-Monoolefine durch Polymerisation, insbesondere durch Trockenphasenpolymerisation, des bzw. der Monomeren bei Temperaturen von 20 bis 160, insbesondere 50 bis 120°C und Drücken von 1 bis 100, insbesondere 20 bis 70 bar, mittels eines Ziegler-Natta-Katalysatorsystems aus

(1) einer Titankomponente, die auf einem feinteiligen, formgebenden Kieselgel basiert und Titan, Magnesium, Chlor sowie ein Benzolcarbonsäurederivat enthält,

(2) einer Aluminiumkomponente der Formel

$$Al\ R_3,$$

worin steht

R für einen nicht mehr als 8, insbesondere nicht mehr als 4 Kohlenstoffatome aufweisenden Alkylrest, sowie

(3) einer Silankomponente der Formel

$$R^1_n\ Si(OR^2)_{4-n},$$

worin stehen

$R^1$ für einen nicht mehr als 16, vorzugsweise nicht mehr als 10 Kohlenstoffatome aufweisenden Kohlenwasserstoffrest gesättigt-aliphatischer und/oder aromatischer Natur,

$R^2$ für einen nicht mehr als 15, vorzugsweise nicht mehr als 8, und insbesondere nicht mehr als 4 Kohlenstoffatome aufweisenden Alkylrest, und

n für eine Zahl von 0 bis 3, vorzugsweise von 0 bis 2, und insbesondere die Zahl 1 oder 2,

mit den Maßgaben, daß das Atomverhältnis Titan aus der Titankomponente (1) : Aluminium aus der Aluminiumkomponente (2) 1 : 10 bis 1 : 800, insbesondere 1 : 20 bis 1 : 300, und das Molverhältnis Aluminiumkomponente (2) : Silankomponente (3) 1 : 0,01 bis 1 : 0,8, insbesondere 1 : 0,02 bis 1 : 0,5 beträgt.

Polymerisationsverfahren dieser Art sind bekannt ; ihre Besonderheit gegenüber vergleichbaren anderen Verfahren liegt in der speziellen Ausgestaltung des Katalysatorsystems, wobei als Prototypen für den vorliegenden Fall die aus den EP-OSen 0014523, 0045977, 0171200 und 0195497 sowie den GB-PSen 2101609 und 2101611 bekannten Verfahren genannt werden können.

Die speziellen Ausgestaltungen der Katalysatorsysteme werden vorgenommen, um bestimmte Ziele zu erreichen, wie die folgenden :

Das Katalysatorsystem soll leicht herstellbar sein und eine hohe Ausbeute an Polymerisat liefern, welches einen möglichst großen isotaktischen Anteil zu enthalten hat. Das Katalysatorsystem soll darüber hinaus Polymerisate mit speziellen morphologischen Eigenschaften erzeugen, etwa im Sinne einer einheitlichen Korngröße und/oder einer Verringerung der Feinstkornanteile und/oder eines hohen Schüttgewichts. Neben diesen für die Beherrschung der Polymerisationssysteme, die Aufarbeitung der Polymerisate und/oder ihre Verarbeitung wichtigen Parametern ist auch ein niedriger Halogengehalt des Polymerisats — besonders im Hinblick auf Korrosionsprobleme — von Bedeutung, was durch Steigerung der Polymerausbeute und/oder ein Katalysatorsystem zu erreichen ist, welches möglichst wenig Halogen enthält.

Manche dieser Ziele sind nach dem Stand der Technik nur mit sehr aufwendigen Verfahren zu erreichen, oder dann, wenn man andere Ziele zurücksetzt :

So wird z.B. in der EP-OS 0045977 ein Katalysatorsystem, bestehend aus "aktivem" $MgCl_2$, $TiCl_4$ und einem Phthalsäurederivat, beschrieben. Mit Kieselgel als formgebendem Trägermaterial ist die Produktivität des Katalysatorsystems jedoch nicht mehr befriedigend ; auch ist der Chlorgehalt der Polymerisate vergleichsweise hoch.

In den EP-OSen 0014523 und 0171200 sowie den GB-PSen 2101609 und 2101611 werden Katalysatorsysteme beschrieben, deren Titankomponente durch Behandeln eines festen, anorganischen Oxids mit einer organischen Magnesiumverbindung, einer Lewis-Base und Titantetrachlorid erhalten wird, wobei zusätzlich ein Halogenierungsmittel, das kein Titantetrachlorid ist und/oder eine organische Verbindung der Metalle Bor, Aluminium, Silicium oder Zinn oder ein Bortrihalogenid oder ein Halogenatome enthaltender Alkohol eingesetzt werden muß. Trotz aufwendiger und langwieriger Herstellungsweise ist die Produktivität des entsprechenden

Katalysatorsystems nicht befriedigend.

In der EP-OS 0195497 wird ein Katalysatorsystem beschrieben, dessen Titankomponente durch Behandeln von $SiO_2$ mit einer organischen Mg-Verbindung, einem Alkohol, einer Lewis-Base und $TiCl_4$ erhalten wird. Auch bei diesem Katalysatorsystem ist die Produktivität gering.

Allen diesen, sowie vergleichbaren anderen Katalysatorsystemen ist gemeinsam, daß das eingesetzte Kieselgel wasserfrei sein muß und darüberhinaus einen möglichst geringen Gehalt an Oberflächen-Hydroxylgruppen aufweisen soll. Um dies zu erreichen, sind neben (i) aufwendigen, zeit- und kostenintensiven thermischen Trocknungsverfahren, wie zweistündigem Erwärmen auf 200°C gefolgt von fünfstündigem Erhitzen auf 700°C (so EP-OS 0208524) oder acht- bis zehnstündigem Erhitzen unter Stickstoff auf 800°C (so US-PS 4568658) oder mehrstündigem Erhitzen unter Stickstoff auf 320 bis 400°C (so die GB-PSen 2101609 und 2101611 sowie die EP-OS 0014523) auch (ii) chemische Behandlungsschritte — z.T. zusätzlich zu einer vorausgegangenen thermischen Behandlung — z.B. insbesondere die Behandlung mit chlorhaltigen Reagenzien, wie $PCl_5$ (so GB-PS 2049709) oder $(CH_3)_3SiCl$ (so EP-OS 0206172), beschrieben. Dennoch weisen die mit einem derart vorbehandelten Kieselgel hergestellten Katalysatorsysteme nur mäßige bis unbefriedigende Produktivitäten auf und/oder sie haben einen unerwünscht hohen Chlorgehalt.

Die bekannten Verfahren lassen somit Wünsche offen, insbesondere was eine gute Produktivität und einen geringen Chlorgehalt in den Polymerisaten — bei zugleich hoher Isotaktizität und guter Morphologie — betrifft.

Hier setzt die Aufgabenstellung der vorliegenden Erfindung an, nämlich eine Titankomponente zu schaffen, die gegenüber den Verfahren des Standes der Technik bei besonders guter Produktivität zugleich Polymerisate mit geringem Chlorgehalt, hoher Isotaktizität und guter Morphologie zu liefern vermag.

Es wurde gefunden, daß die gestellte Aufgabe gelöst werden kann mit einem Katalysatorsystem, das eine aus (I) einem speziellen Trägerstoff, der in definierter Weise aus (Ia) einem bestimmten feinteiligen Kieselgel, das einen relativ hohen Feuchtigkeistsgehalt aufweist, (Ib) einer bestimmten magnesiumorganischen Verbindung und (Ic) einem bestimmten gasförmigen Chlorierungsmittel erhalten worden ist, sowie (II) einem bestimmten Alkanol, (III) Titantetrachlorid sowie (IV) einem speziell ausgewählten Phthalsäureabkömmling in besonderer Weise hergestellte Titankomponente (1) enthält.

Gegenstand der vorliegenden Erfindung ist dementsprechend ein Verfahren zum Herstellen von Homopolymerisaten des Propens sowie Copolymerisaten des Propens mit untergeordneten Mengen anderer $C_2$— bis $C_{12}$—, insbesondere $C_2$-bis $C_6$-$\alpha$-Monoolefine durch Polymerisation, insbesondere durch Trockenphasenpolymerisation, des bzw. der Monomeren bei Temperaturen von 20 bis 160, insbesondere 50 bis 120°C und Drücken von 1 bis 100, insbesondere 20 bis 70 bar, mittels eines Ziegler-Natta-Katalysatorsystems aus

(1) einer Titankomponente, die auf einem feinteiligen, formgebenden Kieselgel basiert und Titan, Magnesium, Chlor sowie ein Benzolcarbonsäurederivat enthält,

(2) einer Aluminiumkomponente der Formel

$$Al\ R_3,$$

worin steht

R für einen nicht mehr als 8, insbesondere nicht mehr als 4 Kohlenstoffatome aufweisenden Alkylrest, sowie

(3) einer Silankomponente der Formel

$$R^1_n\ Si(OR^2)_{4-n},$$

worin stehen

$R^1$ für einen nicht mehr als 16, vorzugsweise nicht mehr als 10 Kohlenstoffatome aufweisenden Kohlenwasserstoffrest gesättigt-aliphatischer und/oder aromatischer Natur

$R^2$ für einen nicht mehr als 15, vorzugsweise nicht mehr als 8, und insbesondere nicht mehr als 4 Kohlenstoffatome aufweisenden Alyklrest, und

n für eine Zahl von 0 bis 3, vorzugsweise von 0 bis 2, und insbesondere die Zahl 1 oder 2,

mit den Maßgaben, daß das Atomverhältnis Titan aus der Titankomponente (1) : Aluminium aus der Aluminiumkomponente (2) 1 : 10 bis 1 : 800, insbesondere 1 : 20 bis 1 : 300 und das Molverhältnis Aluminiumkomponente (2) : Silankomponente (3) 1 : 0,01 bis 1 : 0,8, insbesondere 1 : 0,02 bis 1 : 0,5 beträgt.

Das erfindungsgemäße Verfahren ist dadurch gekennzeichnet, daß man als Titankomponente (1) eine solche einsetzt, die erhalten wird, indem man zunächst

(1.1) in einer ersten Stufe (I) einen Trägerstoff herstellt aus (Ia) einem feinteiligen Kieselgel, das das einen Teilchendurchmesser von 1 bis 1000, vorzugsweise 5 bis 500 und insbesondere 10 bis 200 μm, ein Porenvolumen von 0,3 bis 5,0, insbesondere 1,0 bis 3,0 $cm^3/g$, eine Oberfläche von 100 bis 1000, insbesondere 200 bis 500 $m^2/g$ besitzt, die Formel $SiO_2 \cdot a\ Al_2O_3$ — worin a steht für eine Zahl im Bereich von 0 bis 2, insbesondere 0 bis 0,5 -hat und einen solchen Feuchtigkeitsgehalt aufweist, daß es bei einer Temperatur von 1000°C im Verlauf von 0,5 Stunden 1 bis 20, vorzugsweise 2 bis 15 und insbesondere 4 bis 10 Gew.% — bezogen auf das anfängliche Gesamtgewicht des Kieselgels — Wasser verliert, (Ib) einer magnesiumorganischen Verbindung der Formel $MgR^3R^4$ — worin $R^3$ und $R^4$ stehen für einen $C_2$— bis $C_{10}$—, vorzugsweise $C_4$— bis $C_8$-Alkylrest — und (Ic) einem gasförmigen Chlorierungsmittel der Formel ClZ -worin Z steht für Cl oder H, vorzugsweise H—, derart, daß man zuerst

(1.1.1) in einer ersten Unterstufe in einem flüssigen inerten Kohlenwasserstoff, insbesondere einem Alkan, unter ständiger Durchmischung bei einer Temperatur von 10 bis 120, insbesondere 20 bis 100°C das feinteilige Kieselgel (Ia) und die magnesiumorganische Verbindung (Ib) zusammenbringt, wobei mengenmäßig eingesetzt werden auf 10 Molteile Silicium des Kieselgels (Ia) 1 bis 10, insbesondere 1,5 bis 5 Molteile der magnesiumorganischen Verbindung (Ib), und das Zusammengebrachte während 0,5 bis 5, insbesondere 1 bis 2 Stunden bei einer Temperatur im Bereich von 20 bis 140, insbesondere 60 bis 90°C, hält, dann

(1.1.2) in einer zweiten Unterstufe unter ständiger Durchmischung bei einer Temperatur im Bereich von −20 bis +80, insbesondere 0 bis +60°C, in das aus der ersten Unterstufe Erhaltene das gasförmige Chlorierungsmittel (Ic) einleitet, wobei mengenmäßig eingesetzt werden auf 1 Molteil der magnesiumorganischen Verbindung (IIb) 2 bis 40, insbesondere 5 bis 20 Molteile des Chlorierungsmittels (Ic), das Ganze 0,5 bis 5, insbesondere 0,5 bis 1 Stunden bei einer Temperatur in dem genannten Bereich beläßt und das dabei resultierende festphasige Produkt -d.i. den Trägerstoff (I) — unter Abtrennung der flüssigen Phase isoliert, daraufhin

(1.2) in einer zweiten Stufe ein festphasiges Zwischenprodukt herstellt aus (I) dem in der ersten Stufe erhaltenen Trägerstoff, (II) einem $C_1$— bis $C_6$-Alkanol, insbesondere Ethanol, (III) Titantetrachlorid sowie (IV) einem Phthalsäureabkömmling der Formel

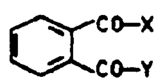

worin stehen X und Y gemeinsam für Sauerstoff oder X sowie Y für Chlor oder einen $C_1$— bis $C_{10}$—, vorzugsweise $C_1$— bis $C_8$-Alkoxyrest, insbesondere für einen Butoxyrest, derart, daß man zuerst

(1.2.1) in einer ersten Unterstufe in einem flüssigen inerten Kohlenwasserstoff, insbesondere einem Alkan, unter ständiger Durchmischung bei Raumtemperatur den Trägerstoff (I) und den Alkanol (II) zusammenbringt, wobei mengenmäßig eingesetzt werden auf 1 Molteil Magnesium des Trägerstoffs (I) 1 bis 5, insbesondere 2,5 bis 3,5 Molteile des Alkanols (II), und das Zusammengebrachte während 0,5 bis 5, insbesondere 1 bis 2 Stunden bei einer Temperatur im Bereich von 20 bis 140, insbesondere 70 bis 90°C hält, anschließend

(1.2.2.) in einer zweiten Unterstufe unter ständiger Durchmischung bei Raumtemperatur in das aus der ersten Unterstufe resultierende Reaktionsgemisch das Titantetrachlorid (III) einbringt, wobei mengenmäßig eingesetzt werden auf 1 Molteil Magnesium des Trägerstoffs (I) 2 bis 20, insbesondere 4 bis 8 Molteile des Titantetrachlorids (III), das Zusammengebrachte während 0,5 bis 5, insbesondere 1 bis 2 Stunden auf einer Temperatur im Bereich von 10 bis 150, insbesondere 90 bis 120°C hält und das dabei resultierende festphasige Zwischenprodukt unter Abtrennung der flüssigen Phase isoliert, mit der Maßgabe, daß zumindest im Zuge einer der Unterstufen (1.2.1) oder (1.2.2) der Phthalsäureabkömmling (IV) eingebracht wird, wobei mengenmäßig eingesetzt werden auf 1 Molteil Magnesium des Trägerstoffs (I) 0,01 bis 1, vorzugsweise 0,1 bis 0,4, insbesondere 0,25 bis 0,35 Molteile des Phthalsäureabkömmlings (IV), dann

(1.3) in einer dritten Stufe das aus der zweiten Stufe erhaltene festphasige Zwischenprodukt bei einer Temperatur im Bereich von 100 bis 150, insbesondere 115 bis 135°C, während einer Zeitspanne von 0,2 bis 5, insbesondere 1,5 bis 3 Stunden einer ein-oder mehrstufigen oder kontinuierlichen Extraktion mit Titantetrachlorid oder einer Mischung aus Titantetrachlorid und einem bis zu 12, vorzugsweise bis zu 10 Kohlenstoffatome aufweisenden Alkylbenzol, insbesondere Ethylbenzol, deren Gewichtsanteil an Titantetrachlorid mindestens 5, insbesondere mindestens 10 Gew.-%, beträgt, unterzieht, wobei mengenmäßig eingesetzt werden auf 10 Gewichtsteile des aus der zweiten Stufe erhaltenen festphasigen Zwischenprodukts insgesamt 10 bis 1000, vorzugsweise 20 bis 800, insbesondere 40 bis 300 Gewichtsteile des Extraktionsmittels, und schließlich

(1.4) in einer vierten Stufe das in der dritten Stufe entstandene festphasige Produkt solange mit einem flüssigen inerten Kohlenwasserstoff, insbesondere einem Alkan, wäscht, bis der Kohlenwasserstoff weniger als 2, vorzugsweise weniger 1 Gew.% Titantetrachlorid enthält — und derart die Titankomponente (1) gewinnt.

Wie sich gezeigt hat, läßt sich das erfindungsgemäße Verfahren mit besonders gutem Erfolg durchführen, wenn ein Katalysatorsystem eingesetzt wird, dessen Silankomponente (3) eine solche ist, in deren Formel

$$R^1_n\,Si(OR^2)_{4-n}$$

stehen

$R^1$ für einen Phenylrest oder $C_1$— bis $C_4$-Alkyl-phenylrest, vorzugsweise Methyl-phenylrest oder Ethyl-phenylrest und vor allem einen p-Methyl-phenylrest,

$R^2$ für einen nicht mehr als 4 Kohlenstoffatome aufweisenden Alkylrest, vor allem einen Methyl- oder Ethylrest, und

n für die Zahl 1 oder 2

Zu dem erfindungsgemäßen Verfahren ist im einzelnen das folgende zu bemerken :

Das Polymerisationsverfahren als solches kann — unter Beachtung der kennzeichnenden Besonderheit — in praktisch allen einschlägig üblichen technologischen Ausgestaltungen durchgeführt werden, etwa als diskontinuierliches, taktweises oder — insbesondere — kontinuierliches Verfahren, sei es z.B. als Suspensionspolymerisationsverfahren oder — insbesondere — Trockenphasenpolymerisationsverfahren. Die erwähnten technologischen Ausgestaltungen — mit anderen Worten : die technologischen Varianten der Polymerisation von α-Monoolefinen nach Ziegler-Natta — sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z.B. mittels Reglern, wie insbesondere Wasserstoff.

Was die stoffliche Seite des neuen Katalysatorsystems betrifft, ist im einzelnen das folgende zu sagen :

(1) Das zur Herstellung der Titankomponente einzusetzende kleinteilige Kieselgel (Ia) wird im allgemeinen ein Alumosilikat oder — insbesondere — ein Siliciumdioxid sein ; wichtig ist, daß es die geforderten Eigenschaften besitzt. Wie sich gezeigt hat, sind die der gegebenen Spezifikation entsprechenden im Handel erhältlichen, für Trägerstoffe einschlägig üblichen Kieselgele gut geeignet. Von besonderer Bedeutung ist, daß das Kieselgel einen solchen Feuchtigkeitsgehalt aufweist, daß es bei einer Temperatur von 1000°C Verlauf von 0,5 Stunden 1 bis 20, vorzugsweise 2 bis 15 und insbesondere 4 bis 10 Gew.% — bezogen auf das anfängliche Gesamtgewicht des Kieselgels — Wasser verliert (Meßmethode : Differential-Thermogravimetrie.)

Die gleichfalls einzusetzende magnesiumorganische Verbindung (Ib) kann z.B. Dibutylmagnesium, Dihexylmagnesium und insbesondere Butyloctylmagnesium sein.

Das ferner einzusetzende gasförmige Chlorierungsmittel (Ic) sollte möglichst trocken und rein sein ; es besteht aus Chlor oder insbesondere Chlorwasserstoff.

Der als Hilfsstoff dienende flüssige inerte Kohlenwasserstoff kann ein Kohlenwasserstoff der Art sein, die üblicherweise mit Titankomponenten für Katalysatorsysteme des Ziegler-Natta-Typs ohne Schaden für das Katalysatorsystem bzw. dessen Titankomponente zusammengebracht wird. Als Beispiele für geeignete Kohlenwasserstoffe seien genannt : Pentane, Hexane, Heptane, Benzine und Cyclohexan.

Die zur Herstellung der Titankomponente (1) einzusetzenden Alkanole (II) können handelsübliche sein ; sie sollten vorteilhafterweise relativ hohe Reinheitsgrade aufweisen. Gut geeignet sind z.B. Ethanol, n-Propyl-, i-Propyl-, n-Butyl-, i-Butyl- oder tert.-Butylalkohol ; besonders geeignet ist Ethanol.

Das zur Herstellung der Titankomponente (1) ebenfalls einzusetzende Titantetrachlorid (III) sollte ein bei Ziegler-Natta-Katalysatorsystemen übliches sein ; der gegebenenfalls im Gemisch mit dem Titantetrachlorid einzusetzende Kohlenwasserstoff sollte möglichst rein und trocken sein.

Auch der einzusetzende, oben näher definierte Phthalsäureabkömmling (IV) kann ein handelsüblicher sein ; er sollte vorteilhafterweise einen hohen Reinheitsgrad aufweisen. Wie sich gezeigt hat, ist für den erfindungsgemäßen Zweck ganz besonders gut geeignet der Phthalsäuredibutylester ; aber auch andere Phthalsäuredialkylester sowie Phthalsäureanhydrid und Phthalsäuredichlorid sind geeignet.

Der zur Herstellung der Titankomponente (1) in Stufe (1.4) einzusetzende Kohlenwasserstoff kann ebenfalls ein üblicher sein ; er sollte vorteilhafterweise einen relativ hohen Reinheitsgrad aufweisen.

Die Herstellung der Titankomponente (1) ist einfach und für den Fachmann ohne Erläuterungen möglich.

Zu den Stufen (1.1), (1.2) und (1.3) ist lediglich zu erwähnen, daß die Isolierung des jeweils resultierenden Feststoffs zweckmäßigerweise durch Absaugen erfolgt.

(2) Als Aluminiumkomponenten (2) mit der angegebenen Formel kommen die einschlägig üblichen, dieser Formel gehorchenden in Betracht ; sie sind aus Literatur und Praxis so wohlbekannt, daß auf sie nicht näher eingegangen zu werden braucht. Als herausragender Vertreter sei beispielsweise genannt Triethylaluminium.

(3) Die das Katalysatorsystem vervollständigende Silankomponente (3) ist insbesondere ein Trialkoxyalkylphenylsilan oder ein Dialkoxydialkylphenylsilan der angegebenen Formel. Als herausragende Vertreter sind zu nennen das Triethoxytoluylsilan sowie das Dimethoxyditoluylsilan ; ferner seien beispielsweise genannt Triethoxyethyl-phenylsilan, Trimethoxytoluylsilan sowie Diethoxyditoluylsilan.

Das erfindungsgemäße Verfahren erlaubt es, Homo- und Copolymerisate, z.B. des binären oder ternären Typs, — auch Blockcopolymerisate — des Propens mit untergeordneten Mengen anderer $C_2$— bis $C_{12}$-α-Monoolefine in vorteilhafter Weise herzustellen, wobei besonders geeignete zu polymerisierende α-Monoolefine als Comonomere Ethen, Buten-1, 4-Methylpenten-1 und Hexen-1 sind ; es eignen sich aber auch z.B. n-Okten-1, n-Decen-1 sowie n-Dodecen-1.

Beispiel 1

Herstellen der Titankomponente (1)

Es wird so verfahren, daß man zunächst

(1.1) in einer ersten Stufe (I) einen Trägerstoff herstellt aus (Ia) einem feinteiligen Kieselgel, das einen Teilchendurchmesser von 20 bis 45 µm, ein Porenvolumen von 1,75 cm³/g, eine Oberfläche von 320 m²/g besitzt, die Formel $SiO_2$ hat und einen solchen Feuchtigkeitsgehalt aufweist, daß es bei einer Temperatur von 1000°C im Verlauf von 0,5 Stunden 7,4 Gew.% — bezogen auf das anfängliche Gesamtgewicht des Kieselgels — Wasser verliert (Meßmethode : Differential-Thermogravimetrie), (Ib) Butyl-octylmagnesium und (Ic) Chlorwasserstoff, derart, daß man zuerst

(1.1.1) in einer ersten Unterstufe in n-Heptan, unter ständiger Durchmischung mittels Rühren bei Raumtemperatur das feinteilige Kieselgel (Ia) und die magnesiumorganische Verbindung (Ib) zusammenbringt, wobei mengenmäßig eingesetzt werden auf 10 Molteile Silicium des Kieselgels (Ia) 5,0 Molteile der magnesiumorganischen Verbindung (Ib), und das Zuammengebrachte während 1,5 Stunden bei einer Temperatur im Bereich von 90°C hält, dann

(1.1.2) in einer zweiten Unterstufe unter ständiger Durchmischung mittels Rühren bei einer Temperatur im Bereich von 20°C in das aus der ersten Unterstufe Erhaltene das gasförmige Chlorierungsmittel (Ic) einleitet, wobei mengenmäßig eingesetzt werden auf 1 Molteil der magnesiumorganischen Verbindung (Ib) 10 Molteile des Chlorierungsmittels (Ic), das Ganze 0,5 Stunden bei einer Temperatur in dem genannten Bereich beläßt und das dabei resultierende festphasige Produkt — d.i. den Trägerstoff (I) — unter Abtrennung der flüssigen Phase isoliert, daraufhin

(1.2) in einer zweiten Stufe ein festphasiges Zwischenprodukt herstellt aus (I) dem in der ersten Stufe erhaltenen Trägerstoff, (II) Ethanol (III) Titantetrachlorid sowie (IV) Phthalsäuredi-n-butylester, derart, daß man zuerst

(1.2.1) in einer ersten Unterstufe in n-Heptan unter ständiger Durchmischung mittels Rühren bei Raumtemperatur den Trägerstoff (I) und das Ethanol (II) zusammenbringt — wobei mengenmäßig eingesetzt werden auf 1 Molteil Magnesium des Trägerstoffs (I) 3 Molteile des Ethanols (II) — und das Zusammengebrachte während 1,5 Stunden bei einer Temperatur im Bereich von 80°C hält, anschließend

(1.2.2) in einer zweiten Unterstufe unter ständiger Durchmischung mittels Rühren bei Raumtemperatur in das aus der ersten Unterstufe resultierende Reaktionsgemisch das Titantetrachlorid (III) einbringt — wobei mengenmäßig eingesetzt werden auf 1 Molteil Magnesium des Trägerstoffs (I) 6 Molteile des Titantetrachlorids (III) — anschließend den Phthalsäuredi-n-butylester einbringt — wobei mengenmäßig eingesetzt werden auf 1 Molteil Magnesium des Trägerstoffs (I) 0,30 Molteile des Phthalsäureesters (IV) — das aus der ersten Unterstufe Erhaltene — das Zusammengebrachte unter Rühren während 2 Stunden auf einer Temperatur im Bereich von 120°C hält, und das dabei resultierende festphasige Zwischenprodukt unter Abtrennung der flüssigen Phase mittels Absaugen isoliert, dann

(1.3) in einer dritten Stufe das aus der zweiten Stufe erhaltene festphasige Zwischenprodukt bei einer Temperatur von 125°C während einer Zeitspanne von 2 Stunden einer kontinuierlichen Extraktion mit einer Mischung aus Titantetrachlorid und Ethylbenzol, deren Anteil an Titantetrachlorid 15 Gew.% beträgt, unterzieht — wobei mengenmäßig eingesetzt werden auf 10 Gew.-Teile des aus der zweiten Stufe erhaltenen festphasigen Zwischenprodukts 140 Gew.-Teile des Titantetrachlorid/Ethylbenzol-Gemischs — hierauf

das entstandene festphasige Zwischenprodukt mittels Filtration isoliert und schließlich (1.4) in einer vierten Stufe das in der dritten Stufe gewonnene festphasige Produkt solange mit n-Heptan wäscht, bis das n-Heptan weniger als 0,3 Gew.% Titantetrachlorid enthält — und derart die Titankomponente (1) gewinnt; sie enthält 2,6 Gew.-% Titan, 9,7 Gew.-% Magnesium und 32,2 Gew.-% Chlor.

Polymerisation

Ein Stahlautoklav von 10-l-Volumen, ausgerüstet mit einem Rührer, wird mit 50 g Polypropenpulver, 10 mMol Aluminiumtriethyl (in Form einer 1-molaren Lösung in n-Heptan) als Aluminiumkomponente (2), 1 mMol Triethoxytoluylsilan (in Form einer 1-molaren Lösung in n-Heptan) als Silankomponente (3), 5 Normalliter Wasserstoff und schließlich 100 mg ( 0,05 mMol Titan), der oben beschriebenen Titankomponente (1) bei 30°C beschickt. Die Reaktortemperatur wird binnen 10 Minuten auf 70°C, der Reaktordruck mittels Aufpressen von gasförmigem Propen in dieser Zeit auf 28 bar gebracht.

Die eigentliche Polymerisation wird unter ständigem Rühren bei 70°C und 28 bar während 2 Stunden durchgeführt, hierbei verbrauchtes Monomer wird kontinuierlich durch frisches ersetzt.

Die Produktivität der Katalysatorkomponente (1), der heptanlösliche Anteil (als Maß für die Isotaktizität) und die Kornverteilung des dabei erhaltenen Polymerisats sind in der nachstehenden Tabelle zusammengestellt.

Beispiel 2

Es wird verfahren wie in Beispiel 1, mit der einzigen Ausnahme, daß als Silankomponente (3) die gleiche Molmenge Dimethoxyditoluylsilan eingesetzt wird.

Zum so erhaltenen Polymerisationsergebnis siehe ebenfalls die nachstehende Tabelle.

Vergleichsversuch 1

Herstellen der Titankomponente

Es wird verfahren wie im Beispiel 1 der EP-OS 0195497.

Man erhält eine Titankomponente, die 3,6 Gew.-% Titan, 4,4 Gew.-% Magnesium und 16 Gew.-% Chlor enthält.

Polymerisation

Sie erfolgt wie im Beispiel 1, jedoch nicht mit der dort beschriebenen Titankomponente, sondern mit der gleichen Molmenge der vorstehend bezeichneten Titankomponente.

Zum dabei erreichten Polymerisationsergebnis siehe wiederum die nachstehende Tabelle.

Vergleichsversuch 2

Herstellen der Titankomponente

Es wird verfahren wie im Beispiel 1, wobei jedoch das eingesetzte Kieselgel 3 Stunden bei 500°C getrocknet wird.

Man erhält hierbei eine Titankomponente, die 2,5 Gew.% Titan, 10,2 Gew.% Magnesium und 33,1 Gew.% Chlor enthält.

Polymerisation

Die Polymerisation erfolgt wie im Beispiel 1, jedoch nicht mit der dort beschriebenen Titankomponente, sondern mit der gleichen Molmenge der vorstehend beschriebenen Titankomponente.

Zum dabei erreichten Polymerisationsergebnis siehe wiederum die nachstehenden Tabelle.

| | Produktivität (g PP/g Kat.) | Heptanlösliche Anteile (Gew.-%) | Kornverteilung (mm) <0,25 | 0,25-0,5 | 0,5-1 | 1-2 | >2 | Chlorgehalt im Produkt (ppm) |
|---|---|---|---|---|---|---|---|---|
| Beispiel 1 | 17 000 | 1,6 | 4,5 | 6,8 | 28,6 | 58,1 | 2,0 | 19 |
| Beispiel 2 | 19 700 | 1,8 | 3,8 | 6,9 | 25,6 | 61,4 | 2,3 | 16 |
| Vergl.-vers. 1 | 3 500 | 4,0 | 3,0 | 29,8 | 54,0 | 12,2 | 1,0 | 46 |
| Vergl.-vers. 2 | 16 800 | 1,7 | 14,4 | 13,6 | 33,9 | 35,9 | 2,2 | 19 |

Wie aus der Tabelle zu ersehen ist, weist die Katalysatorkomponente aus Vergleichsversuch 1 eine wesentlich geringere Produktivität und Stereospezifität auf als die Katalysatorkomponenten aus den erfindungsgemäßen Beispielen. Vergleichsversuch 2 dokumentiert, daß die mit "ausgeheiztem" Kieselgel hergestellte Titankomponente zwar eine vergleichbare Produktivität, jedoch drastisch erhöhte Feinanteile besitzt.

## Patentansprüche

1. Verfahren zum Herstellen von Homopolymerisaten des Propens sowie Copolymerisaten des Propens mit untergeordneten Mengen anderer $C_2$— bis $C_{12}$-α-Monoolefine durch Polymerisation des bzw. der Monomeren bei Temperaturen von 20 bis 160°C und Drücken von 1 bis 100 bar mittels eines Ziegler-Natta-Katalysatorsystems aus

(1) einer Titankomponente, die auf einem feinteiligen, formgebenden Kieselgel basiert und Titan, Magnesium, Chlor sowie ein Benzolcarbonsäurederivat enthält,

(2) einer Aluminiumkomponente der Formel

$$Al\,R_3,$$

worin steht

R für einen nicht mehr als 8 Kohlenstoffatome aufweisenden Alkylrest,
sowie

(3) einer Silankomponente der Formel

$$R^1_n\,Si(OR^2)_{4-n}$$

worin stehen

$R^1$ für einen nicht mehr als 16 Kohlenstoffatome aufweisenden Kohlenwasserstoffrest gesättigt-aliphatischer und/oder aromatischer Natur,
$R^2$ für einen nicht mehr als 15 Kohlenstoffatome aufweisenden Alkylrest, und
n für eine Zahl von 0 bis 3,

mit den Maßgaben, daß das Atomverhältnis Titan aus der Titankomponente (1) : Aluminium aus der Aluminiumkomponente (2) 1 : 10 bis 1 : 800 und das Molverhältnis Aluminiumkomponente (2) : Silankomponente (3) 1 : 0,01 bis 1 : 0,8 beträgt, dadurch gekennzeichnet, daß man als Titankomponente (1) eine solche einsetzt, die erhalten wird, indem man zunächst

(1.1) in einer ersten Stufe (I) einen Trägerstoff herstellt aus (Ia) einem feinteiligen Kieselgel, das einen Teilchendurchmesser von 1 bis 1000 µm, ein Porenvolumen von 0,3 bis 5 $cm^3/g$, eine Oberfläche von 100 bis 1000 $m^2/g$ besitzt, die Formel $SiO_2 \cdot a\,Al_2O_3$ — worin a steht für eine Zahl im Bereich von 0 bis 2 — hat und einen solchen Feuchtigkeitsgehalt aufweist, daß es bei einer Temperatur von 1000°C im Verlauf von 0,5 Stunden 1 bis 20 Gew.% — bezogen auf das anfängliche Gesamtgewicht des Kieselgels — Wasser verliert, (Ib) einer magnesiumorganischen Verbindung der Formel $MgR^3R^4$ — worin $R^3$ und $R^4$ stehen für einen $C_2$— bis $C_{10}$-Alkylrest — und (Ic) einem gasförmigen Chlorierungsmittel der Formel ClZ — worin Z steht für Cl oder H—, derart, daß man zuerst

(1.1.1) in einer ersten Unterstufe in einem flüssigen inerten Kohlenwasserstoff unter ständiger Durchmischung bei einer Temperatur von 10 bis 120°C das feinteilige Kieselgel (Ia) und die magnesiumorganische Verbindung (Ib) zusammenbringt, wobei mengenmäßig eingesetzt werden auf 10 Molteile Silicium des Kieselgels (Ia) 1 bis 10 Molteile der magnesiumorganischen Verbindung (Ib), und das Zusammengebrachte während 0,5 bis 5 Stunden bei einer Temperatur im Bereich von 20 bis 140°C hält, dann

(1.1.2) in einer zweiten Unterstufe unter ständiger Durchmischung bei einer Temperatur im Bereich von −20 bis +80°C in das aus der ersten Unterstufe Erhaltene das gasförmige Chlorierungsmittel (Ic) einleitet, wobei mengenmäßig eingesetzt werden auf 1 Molteil der magnesiumorganischen Verbindung (Ib) 2 bis 40 Molteile des Chlorierungsmittels (Ic), das Ganze 0,5 bis 5 Stunden bei einer

Temperatur in dem genannten Bereich beläßt und das dabei resultierende festphasige Produkt — d.i. den Trägerstoff (I) — unter Abtrennung der flüssigen Phase isoliert, daraufhin

(1.2) in einer zweiten Stufe ein festphasiges Zwischenprodukt herstellt aus (I), dem in der ersten Stufe erhaltenen Trägerstoff, (II) einem $C_1$— bis $C_8$-Alkanol, (III) Titantetrachlorid sowie (IV) einem Phthalsäureabkömmling der Formel

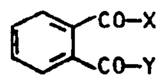

worin stehen X und Y gemeinsam für Sauerstoff oder X sowie Y für Chlor oder einen $C_1$— bis $C_{10}$-Alkoxyrest, derart, daß man zuerst

(1.2.1) in einer ersten Unterstufe in einem flüssigen inerten Kohlenwasserstoff unter ständiger Durchmischung bei Raumtemperatur den Trägerstoff (I) und den Alkanol (II) zusammenbringt, wobei mengenmäßig eingesetzt werden auf 1 Molteil Magnesium des Trägerstoffs (I) 1 bis 5 Molteile des Alkanols (II) und das Zusammengebrachte während 0,5 bis 5 Stunden bei einer Temperatur im Bereich von 20 bis 140°C hält, anschließend

(1.2.2) in einer zweiten Unterstufe unter ständiger Durchmischung bei Raumtemperatur in das aus der ersten Unterstufe resultierende Reaktionsgemisch das Titantetrachlorid (III) einbringt, wobei mengenmäßig eingesetzt werden auf 1 Molteil Magnesium des Trägerstoffs (I) 2 bis 20 Molteile des Titantetrachlorids (III), das Zusammengebrachte während 0,5 bis 5 Stunden auf einer Temperatur im Bereich von 10 bis 150°C hält und das dabei resultierende festphasige Zwischenprodukt unter Abtrennung der flüssigen Phase isoliert,

mit der Maßgabe, daß zumindest im Zuge einer der Unterstufen (1.2.1) bis (1.2.2) der Phthalsäureabkömmling (IV) eingebracht wird, wobei mengenmäßig eingesetzt werden auf 1 Molteil Magnesium des Trägerstoffs (I) 0,01 bis 1 Molteile des Phthalsäureabkömmlings (IV), dann

(1.3) in einer dritten Stufe das aus der zweiten Stufe erhaltene festphasige Zwischenprodukt bei einer Temperatur im Bereich von 100 bis 150°C während einer Zeitspanne von 0,2 bis 5 Stunden einer ein- oder mehrstufigen oder kontinuierlichen Extraktion mit Titantetrachlorid oder einer Mischung aus Titantetrachlorid und einem bis zu 12 Kohlenstoffatome aufweisenden Alkylbenzol, deren Gewichtsanteil an Titantetrachlorid mindestens 5% beträgt, unterzieht, wobei mengenmäßig eingesetzt werden auf 10 Gewichtsteile des aus der zweiten Stufe erhaltenen festphasigen Zwischenprodukts insgesamt 10 bis 1000 Gew.-Teile des Extraktionsmittels, und schließlich

(1.4) in einer vierten Stufe das in der dritten Stufe entstandene festphasige Produkt solange mit einem flüssigen inerten Kohlenwasserstoff wäscht, bis der Kohlenwasserstoff weniger als 2 Gew.% Titantetrachlorid enthält -und derart die Titankomponente (1) gewinnt.

2. Verfahren gemäß Patentanspruch 1, dadurch gekennzeichnet, daß ein Katalysatorsystem eingesetzt wird, dessen Silankomponente (3) eine solche ist, in deren Formel

$$R^1_n Si(OR^2)_{4-n}$$

stehen

$R^1$ für einen Phenylrest oder $C_1$— bis $C_4$-Alkyl-phenylrest,
$R^2$ für einen nicht mehr als 4 Kohlenstoffatome aufweisenden Alkylrest, und
n für die Zahl 1 oder 2.

3. Verfahren gemäß Patentanspruch 2, dadurch gekennzeichnet, daß ein Katalysatorsystem eingesetzt wird, dessen Silankomponente (3) eine solche ist, in deren Formel

$$R^1_n Si(OR^2)_{4-n}$$

stehen

$R^1$ für einen Methyl-phenylrest oder Ethyl-phenylrest
$R^2$ für einen Methyl- oder Ethyl-rest

n für die Zahl 1 oder 2.

## Revendications

1. Procédé de préparation d'homopolymères du propylène ainsi que de copolymères du propylène avec des quantités mineures d'autres α-mono-oléfines en $C_2$ à $C_{12}$, par polymérisation du ou des monomères à des températures de 20 à 160°C et sous des pressions de 1 à 100 bar à l'aide d'un système catalytique de Ziegler-Natta constitué par

(1) un composant à base de titane qui est fixé sur un gel de silice finement divisé de mise en forme et contient du titane, du magnésium, du chlore ainsi qu'un dérivé d'acide benzènecarboxylique,

(2) un composant à base d'aluminium de formule

$$Al\ R_3,$$

dans laquelle

R est mis pour un reste alkyle ne renfermant pas plus de 8 atomes de carbone, et

(3) un composant silane de formule

$$R^1_n\ Si(OR^2)_{4-n}$$

dans laquelle

$R^1$ est mis pour un reste hydrocarboné de nature aliphatique saturée et/ou aromatique, ne renfermant pas plus de 16 atomes de carbone,

$R^2$ est mis pour un reste alkyle ne renfermant pas plus de 15 atomes de carbone, et

n est mis pour un nombre de 0 à 3,

étant spécifié que le rapport atomique du titane du composant à base de titane (1) à l'aluminium du composant à base d'aluminium (2) est compris entre 1 : 10 et 1 : 800, et que le rapport moléculaire du composant à base d'aluminium (2) au composant silane (3) est compris entre 1 : 0,01 et 1 : 0,8, caractérisé en ce qu'on utilise, comme composant à base de titane (1), un composant que l'on obtient

(1.1) en préparant tout d'abord, dans une première étape (I), un support composé : (Ia) d'un gel de silice finement divisé qui a un diamètre de particules de 1 à 1000 µm, un volume de pores de 0,3 à 5 $cm^3/g$, une surface de 100 à 1000 $m^2/g$, qui répond à la formule $SiO_2 \cdot a\ Al_2O_3$ — dans laquelle a est mis pour un nombre dans la gamme de 0 à 2 — et qui a une teneur en humidité telle qu'à une température de 1000°C, il perd de 1 à 20% en poids d'eau (par rapport au poids initial total du gel de silice) en l'espace de 0,5 h ; (Ib) d'un composé organomagnésien de formule $MgR^3R^4$ — dans laquelle $R^3$ et $R^4$ sont mis chacun pour un reste alkyle en $C_2$ à $C_{10}$— ; et (Ic) d'un agent de chloration gazeux de formule ClZ — dans laquelle Z est mis pour Cl ou H—, cette préparation étant effectuée

(1.1.1) dans une première sous-étape, en mettant d'abord en contact, dans un hydrocarbure inerte liquide, sous mélange continu et à une température de 10 à 120°C, le gel de silice finement divisé (Ia) et le composé organomagnésien (Ib), avec utilisation, pour 10 parties en moles de silicium du gel de silice (Ia), de 1 à 10 parties en moles du composé organomagnésien (Ib), et en maintenant ce mélange pendant 0,5 à 5 h à une température dans la gamme de 20 à 140°C, puis

(1.1.2.) dans une seconde sous-étape, en envoyant l'agent de chloration gazeux (Ic) dans le produit obtenu dans la première sous-étape, sous mélange continu et à une température dans la gamme de −20 à +80°C, avec utilisation, pour 1 partie en moles du composé organomagnésien (Ib), de 2 à 40 parties en moles de l'agent de chloration (Ic), en abandonnant le tout pendant 0,5 à 5 h à une température dans ladite gamme, et en isolant le produit en phase solide résultant — c'est-à-dire le support (I) — par séparation de la phase liquide,

(1.2) en préparant ensuite, dans une deuxième étape, un produit intermédiaire en phase solide à partir de : (I), le support obtenu dans la première étape ; (II) un alcanol en $C_1$ à $C_8$ ; (III) du tétrachlorure de titane ; et (IV) un dérivé d'acide phtalique de formule

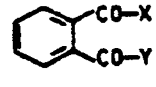

dans laquelle X et Y représentent en commun un atome d'oxygène ou X et Y sont mis chacun pour un atome de chlore ou un reste alcoxy en $C_1$ à $C_{10}$, cette préparation étant effectuée

(1.2.1) dans une première sous-étape, en mettant d'abord en contact, dans un hydrocarbure inerte liquide, sous mélange continu à la température ambiante, le support (I) et l'alcanol (II), avec utilisation, pour 1 partie en mole de magnésium du support (I), de 1 à 5 parties en moles de l'alcanol (II), et en maintenant ce mélange pendant 0,5 à 5 h à une température dans la gamme de 20 à 140°C, puis

(1. 2. 2) dans une seconde sous-étape, en introduisant le tétrachlorure de titane (III), sous mélange continu à la température ambiante, dans le mélange réactionnel résultant de la première sous-étape, avec utilisation, pour 1 partie en moles de magnésium du support (I), de 2 à 20 parties en moles du tétrachlorure de titane (III), en maintenant ce mélange pendant 0,5 à 5 h à une température dans la gamme de 10 à 150°C, et en isolant le produit intermédiaire en phase solide résultant par séparation de la phase liquide,

étant spécifié que le dérivé d'acide phtalique (IV) est introduit au cours de l'une au moins des sous-étapes (1.2.1) ou (1.2.2), avec utilisation, pour 1 partie en moles de magnésium du support (I), de 0,01 à 1 partie en moles du dérivé d'acide phtalique (IV), puis

(1.3) dans une troisième étape, en soumettant le produit intermédiaire en phase solide obtenu dans la deuxième étape, à une température dans la gamin de 100 à 150°C pendant un laps de temps de 0,2 à 5 h, à une extraction en continu ou en un ou plusieurs stades avec du tétrachlorure de titane ou un mélange de tétrachlorure de titane et d'un alkylbenzène renfermant jusqu'à 12 atomes de carbone, mélange dont la part en poids de tétrachlorure de titane s'élève au moins à 5%, avec utilisation au total, pour 10 parties en poids du produit intermédiaire en phase solide obtenu dans la deuxième étape, de 10 à 1000 parties en poids de l'agent d'extraction,et enfin

(1.4) dans une quatrième étape, en lavant le produit en phase solide formé dans la troisième étape avec un hydrocarbure inerte liquide jusqu'à ce que l'hydrocarbure contienne moins de 2% en poids de tétrachlorure de titane, ce qui donne finalement le composant à base de titane (1).

2. Procédé selon la revendication 1, caractérisé en ce qu'on utilise un système catalytique dont le composant silane (3) est un corps dans la formule

$$R^1_n\ Si(OR^2)_{4-n}$$

duquel

$R^1$ est mis pour un reste phényle ou pour un reste $C_1$-$C_4$-alkylphényle,
$R^2$ est mis pour un reste alkyle ne renfermant pas plus de 4 atomes de carbone, et
n est mis pour le nombre 1 ou 2.

3. Procédé selon la revendication 2, caractérisé en ce qu'on utilise un système catalytique dont le composant silane (3) est un corps dans la formule

$$R^1_nSi(OR^2)_{4-n}$$

duquel

$R^1$ est mis pour un reste méthylphényle ou pour un reste éthylphényle,
$R^2$ est mis pour un reste méthyle ou éthyle, et
n est mis pour le nombre 1 ou 2.

## Claims

1. A process for the preparation of a homopolymer of propene or a copolymer of propene with minor amounts of other $C_2$-$C_{12}$-$\alpha$-monoolefins by polymerization of the monomer or monomers at from 20 to 160°C and under from 1 to 100 bar using a Ziegler-Natta catalyst system consisting of

(1) a titanium component which is based on a finely divided, shape-imparting silica gel and contains titanium, magnesium, chlorine and a benzenecarboxylic acid derivative,

(2) an aluminum component of the formula

$$Al\ R_3$$

where R is alkyl of not more than 8 carbon atoms, and
(3) a silane component of the formula

$$R^1_n Si(OR^2)_{4-n}$$

where $R^1$ is a saturated aliphatic and/or aromatic hydrocarbon radical of not more than 16 carbon atoms, $R^2$ is alkyl of not more than 15 carbon atoms and n is from 0 to 3,
with the provisos that the atomic ratio of titanium from the titanium component (1) to aluminum from the aluminum component (2) is from 1 : 10 to 1 : 800 and the molar ratio of aluminum component (2) to silane component (3) is from 1 : 0.01 to 1 : 0.8, wherein the titanium component (1) used is one which is obtained by a procedure in which first

(1.1) in a first stage (I), a carrier is prepared from (Ia) a finely divided silica gel which has a particle diameter of from 1 to 1, 000 µm, a pore volume of from 0. 3 to 5 $cm^3/g$ and a specific surface area of from 100 to 1,000 $m^2/g$, is of the formula $SiO_2 \cdot a\ Al_2O3_3$, where a is from 0 to 2, and has a moisture content such that it loses from 1 to 20% by weight, based on the initial total weight of the silica gel, of water at 1000°C in the course of 0.5 hour, (Ib) an organomagnesium compound of the formula $MgR^3R^4$, where $R^3$ and $R^4$ are each $C_2$-$C_{10}$-alkyl, and (Ic) a gaseous chlorinating agent of the formula ClZ, where Z is Cl or H, by a procedure in which first

(1.1.1) in a first sub-stage, the finely divided silica gel (Ia) and the organomagnesium compound (Ib) are combined in an inert liquid hydrocarbon with constant thorough mixing at from 10 to 120°C, from 1 to 10 molar parts of the organomagnesium compound (Ib) being used per 10 molar parts of silicon of the silica gel (Ia), and the substances combined are kept at from 20 to 140°C for from 0.5 to 5 hours, then

(1.1.2) in a second sub-stage, the gaseous chlorinating agent (Ic) is passed, with constant thorough mixing and at from –20 to +80°C, into the mixture obtained in the first sub-stage, from 2 to 40 molar parts of the chlorinating agent (Ic) being used per molar part of the organomagnesium compound (Ib), the entire mixture is kept at a temperature in the stated range for from 0.5 to 5 hours and the resulting solid-phase product, ie. the carrier (I), is isolated with removal of the liquid phase, thereafter

(1.2) in a second stage, a solid-phase intermediate is prepared from (I) the carrier obtained in the first stage, (II) a $C_1$-$C_8$-alkanol, (III) titanium tetrachloride and (IV) a phthalic acid derivative of the formula

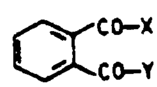

where X and Y together are oxygen or X and Y are each chlorine or $C_1$-$C_{10}$-alkoxy, by a procedure in which first

(1.2.1) in a first sub-stage, the carrier (I) and the alkanol (II) are combined in an inert liquid hydrocarbon, with constant thorough mixing at room temperature, from 1 to 5 molar parts of the alkanol (II) being used per molar part of magnesium of the carrier (I), and the substances combined are kept at from 20 to 140°C for from 0.5 to 5 hours, then

(1.2.2) in a second sub-stage, the titanium tetrachloride (III) is introduced, with constant thorough mixing and at room temperature, into the reaction mixture resulting from the first sub-stage, from 2 to 20 molar parts of the titanium tetrachloride (III) being used per molar part of magnesium of the carrier (I), the substances combined are kept at from 10 to 150°C for from 0.5 to 5 hours and the resulting solid-phase intermediate is isolated with removal of the liquid phase,
with the proviso that the phthalic acid derivative (IV) is introduced in the course of one or both of the sub-stages (1.2.1) and (1.2.2), from 0.01 to 1 molar part of the phthalic acid derivative (IV) being used per molar part of magnesium of the carrier (I), then

(1.3) in a third stage, the solid-phase intermediate obtained in the second stage is subjected, at from 100 to 150°C for from 0.2 to 5 hours, to a single-stage or multi-stage or continuous extraction with titanium tetrachloride or a mixture of titanium tetrachloride and an alkylbenzene of not more than 12 carbon atoms, the said mixture containing not less than 5% by weight of titanium tetrachloride, and a total of from 10 to 1,000 parts by weight of the extracting agent being used per 10 parts by weight of the solid-phase intermediate obtained in the second stage, and finally

(1.4) in a fourth stage, the solid-phase product formed in the third stage is washed with an inert liquid hydrocarbon until the hydrocarbon contains less than 2% by weight of titanium tetrachloride, and the

titanium component (1) is obtained in this manner.

2. A process as claimed in claim 1, wherein a catalyst system is used whose silane component (3) is of the formula

$$R^1_n Si(OR^2)_{4-n}$$

where $R^1$ is phenyl or $C_1$-$C_4$-alkylphenyl, $R^2$ is alkyl of not more than 4 carbon atoms and n is 1 or 2.

3. A process as claimed in claim 2, wherein a catalyst system is used whose silane component (3) is of the formula

$$R^1_n Si(OR^2)_{4-n}$$

where $R^1$ is methylphenyl or ethylphenyl, $R^2$ is methyl or ethyl and n is 1 or 2.